# EUROPEAN PATENT APPLICATION

(11) **EP 2 028 615 A1**
(43) Date of publication of application: **25.02.2009**
(21) Application number: 07016267.2
(22) Date of filing: 20.08.2007
(51) Int. Cl.: G06Q 30/00

(54) **Distribution system of program combined with advertisement according to distribution data and time**

(71) Applicant: Syon Communications, Okinawa 904-2234 (JP)
(72) Inventor: Shen, David, Okinawa-city Okinawa 904-2173 (JP)
(74) Representative: Luderschmidt, Schüler & Partner

(57) **Abstract**

In a program distribution system which downloads advertisement-inserted programs to a client system to distribute the program, distribution of programs combined with advertisement according to distribution date/time has not been performed. Also, there has been no mechanism in which there is a plurality of advertisers for one program by distributing the program combined with an advertisement which is randomly selected for one program from a plurality of specified advertisements or combined with an advertisement selected according to a specified rate. Therefore, the problems are solved by a method of generating an error by intentionally causing a download-requested program not to be present with respect to a download request from a client, detecting the error so as to start a program, and generating an advertisement-inserted program in real time so as to distribute it to the client, and by randomly selecting or selecting at a predetermined rate a program from advertisement-combined program files created in advance.

## Description

### BACKGROUND OF THE INVENTION

### 1. Technical Field

The present invention relates to program distribution using a server/client system on a network and particularly relates to a method of combining programs with advertisements.

### 2. Background Art

Conventionally, there has been methods of distributing audio programs or video programs via networks and methods of inserting advertisements into the programs, distributing them, and charging advertisers. Particularly, there has been a method using streaming reproduction in which a user is let to select a plurality of contents that the user wants to browse, a reproduction list including reproduction items of advertisement contents based on a contents successive transmission request according to the selection, and the advertisement contents are provided to the user without causing unnatural feeling (see Japanese Patent Application Laid-Open (kokai) No. 2004-135077).

Recently, a distribution method of a program in which one file is downloaded to a client and the client once downloads the file to a computer or a mobile terminal so as to view/listen to the file, which is different from distribution methods of streaming such as audio distribution using podcasting, is frequently used. In the case of this method, separated files of independent programs or advertisements cannot be successively distributed to a user according to the reproduction list like above mentioned streaming method, and a program into which advertisements are inserted cannot be distributed to the user unless an advertisement-inserted program file in which a program and advertisements are combined is created in advance. Moreover, there is appropriate timing for advertisements, and the type of viewers/listeners is different depending on the downloading time; therefore, advertisements have to be distributed according to the type of the viewers/listeners. However, there has been no distribution system of a program combined with advertisement according to distribution date and time. Also, there has been no system for distributing one program combined with different advertisements so that there can be a plurality of advertisers for one program.

### SUMMARY OF THE INVENTION

It is an object of the present invention to create and distribute a file, in which a program and an advertisement are combined, in a program distribution system for distributing advertisement-inserted programs via a network. It is also another object of the present invention to enhance the effect of the advertisement in the process by combining the program with the advertisement according to the distribution date and time and to provide a system for distributing one program combined with different advertisements so that there can be a plurality of advertisers even for one program. In order to achieve the objects, a program distribution system of the present invention has a web server for distributing a program, a program saving unit, an advertisement saving unit, and a program and advertisement combining unit, wherein the program and advertisement combining unit combines an advertisement with a program according to the downloading time so as to create a file, and the file is distributed to a user; thus, the objects are achieved.

### BRIEF DESCRIPTION OF THE DRAWINGS

FIG. 1 is a network configuration diagram of a distribution system of a client server (First Embodiment);
FIG. 2 is a block configuration diagram of an advertisement server (First Embodiment);
FIG. 3 is a configuration diagram of an advertisement bank server (First Embodiment);
FIG. 4 is a functional block diagram of a registration function from a browser of the advertisement bank server (First Embodiment);
FIGs. 5A to 5C are structure diagrams of a program file and schematic diagrams of the program file and advertisement files;
FIG. 6 is a functional block diagram of a program stock generation function of the advertisement bank server (First Embodiment) ;
FIG. 7 is a flowchart of the program stock generation function of the advertisement bank server (First Embodiment);
FIG. 8 is a functional block diagram of a program real-time generation function of the advertisement bank server (First Embodiment);
FIG. 9 is a flowchart of the program real-time generation function of the advertisement bank server (First Embodiment); and
FIG. 10 is a flowchart of an advertisement replacement function of the advertisement bank server (First Embodiment).

### DESCRIPTION OF EMBODIMENT

As an embodiment of the present invention, an embodiment of a program distribution system for realizing audio distribution through the Internet, particularly, a download-type audio program distribution system in a HTTP (Hyper Text Transfer Protocol) communication method corresponding to podcast will be described.

### Network Configuration

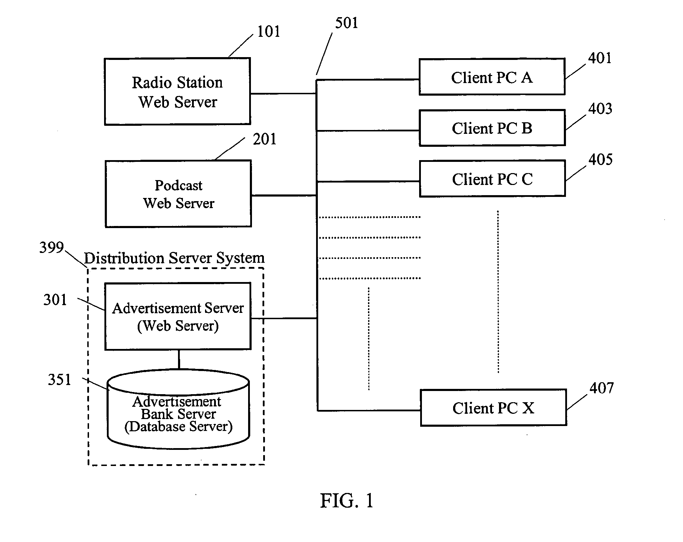

FIG. 1 shows a diagram of network configuration of the present embodiment.

Many client PCs (401 to 407) serving as client computers are connected to a web server 101 of a radio broadcasting station, a podcast web server 201, and an advertisement server 301, which is a web server in a distribution server system 399, via the Internet 501.

The distribution server system 399 comprises the advertisement server 301 and an advertisement bank server 351. The advertisement bank server 351 is connected to the advertisement server 301 via local network, and the advertisement bank server 351 is not directly connected to the Internet 501.

In the advertisement server, programs and advertisements are registered in a database; and, in accordance with predetermined instructions, advertisement-inserted program files are created by combining the programs with the advertisements, and the files are saved in directories which can be accessed by the advertisement server 301.

Users of the client PCs access the web server 101 of the radio broadcasting station creating programs that they want to view or listen to by browser programs or access the podcast web server 201 by the music management software programs supporting RSS(for example, iTunes).

The podcast web server is a web server running a portal site introducing podcast-supporting programs. The examples of the portal site include iTunes Music Store of Apple (registered trademark).

Links to RSS files of, for example, advertisement-inserted programs which are desired to be distributed are provided on the podcast web server. The link destination thereof is the web server of the advertisement server 301.

A distribution method by a client browser via the broadcasting station web server is performed in the below manner.

When the client PC A;401 accesses the web server 101 of the radio broadcasting station, which is a program creator, by a browser program, a list of the programs which can be distributed via the Internet is shown as links. Actual programs are on the advertisement server 301. When a link in the list of the programs is selected on the browser of the client PC A;401, a download request of the selected program on the advertisement server 301 is generated from the client PC A;401, and the advertisement server 301 received the download request transmits the program to the client PC A;401.

A distribution method from a RSS-supporting music management software program of the client via the podcast web server is performed in the following manner.

When the client PC A;401 starts up the RSS-supporting music management software program, a list of broadcasting programs is shown on the RSS-supporting music management program, similar to the above described browser.

Advance setting can specify an operation of checking whether there is a newly distributed program or not. In that case, when the RSS-supporting music management software is started up, in order to check whether there is a new file of the podcast program which is specified for new program checking, the RSS-supporting music management software downloads an RSS file on the advertisement server 301 and compares the file with the program downloaded to local of the client PC A;401. When there is a new program, a download request of the new program on the advertisement server 301 is generated by the client PC A;401, and the advertisement server 301, which receives the download request, transmits the new program to the client PC A;401.

The client PC (personal computer) downloads programs from the advertisement server according to the above described methods and has a program viewing/listening means which enables viewing/listening of the downloaded programs, for example, by a audio reproduction program or a multimedia reproduction program (for example, RSS-supporting music management software) loaded on the client PC.

### Configuration of Advertisement Server

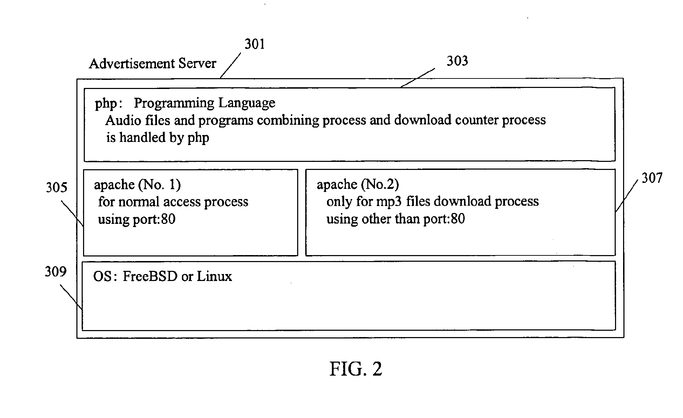

An internal configuration of the advertisement server 301 which is a web server in the distribution server system is shown in FIG. 2.

In the advertisement server 301, a PHP program 303 which processes a script language PHP (Hypertext Preprocessor) which is described on HTML of a web server, apache (No. 1) 305 which is a web server using a port No. 80 which is a normal HTTP standard port number, and apache (No. 2) 307 which is an error processing web server used in dedication to download processing of MP3 serving as audio program files and uses a port number other than No. 80 are operating on an OS (Operating System) 309. FreeBSD or Linux can be operated as the OS 309.

The apache (No. 1) 305 and the apache (No. 2) 307 have advertisement-inserted program distribution units which distribute advertisement-inserted programs to users.

### Configuration of Advertisement Bank Server

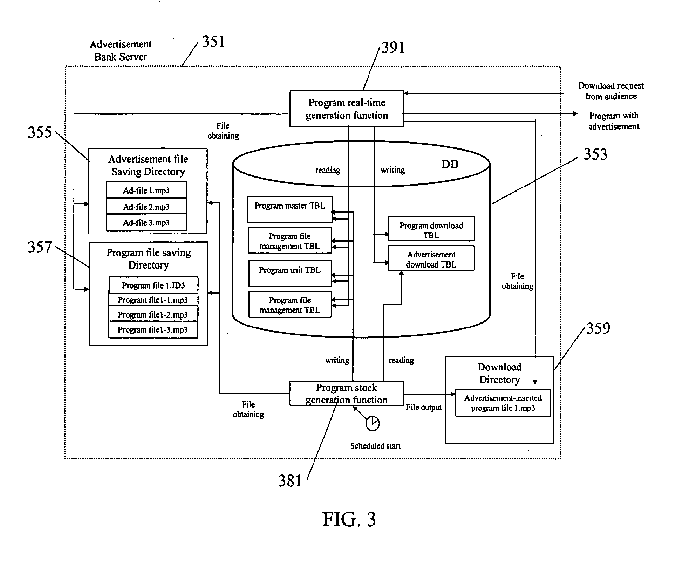

A configuration of the advertisement bank server 351 which retains the programs and advertisements in the distribution server system and has a function of combining programs with advertisements is shown in FIG. 3.

The advertisement bank server 351 has a DB server 353.

The bank server also has an advertisement file saving directory 355 which is an advertisement saving unit saving advertisement files.

The bank server also has a program file saving directory 357 which is a program saving unit saving program files.

The bank server also has a program real-time generation function 391 serving as a program advertisement combining unit which generates an advertisement-inserted program in real time by combining the advertisement file with the program file when there is a download request from a viewer/listener.

The bank server also has a program stock generation function 381 serving as a program and advertisement combining unit which is activated at predetermined time, creates an advertisement-inserted program by combining the advertisement file with the program file, and stocking it.

The bank server also has a download directory 359 serving as an advertisement-inserted program saving unit which saves the advertisement-inserted programs created by the program real-time generation function 391 and the program stock creation function 381.

Mechanism of Advertisement-Inserted Program Creation in Advertisement Bank Server

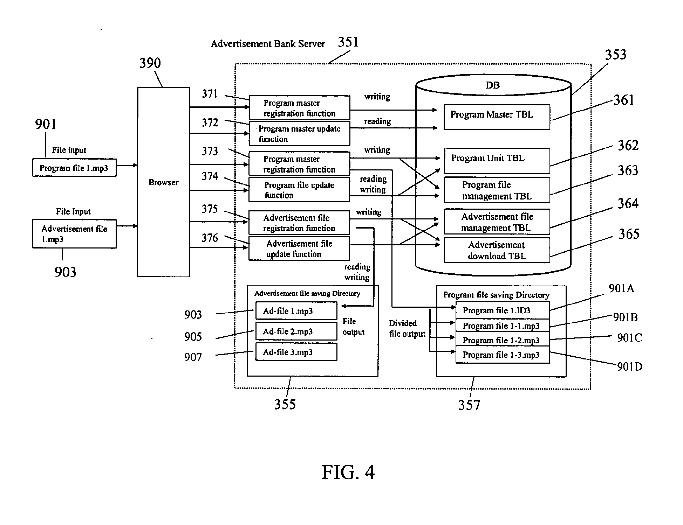

Operation of the advertisement bank server will be described in further detail with reference to FIG. 4.

A program file 1.mp3 (901) of the MP3 format and an advertisement file 1.mp3 (903) which is an advertisement file of the MP3 format are registered by using a browser program 390 connected to the advertisement bank server.

Upon registration, a program master table 361 is created on a database (DB) 353 on the advertisement bank server 351 by using a program master registration function 371.

Upon change and update of the contents of programs, the contents of the program master table 361 are similarly updated by using a program master update function 372.

The program file 1.mp3 (901) is divided into a program file 1.ID3 (901A) having pointers to divided files, a program file 1-1.mp3 (901B) which is a divided audio file, a program file 1-2.mp3 (901C), and a program file 1-3.mp3 (901D) by a program file registration function 373 and output to a program file saving directory 357.

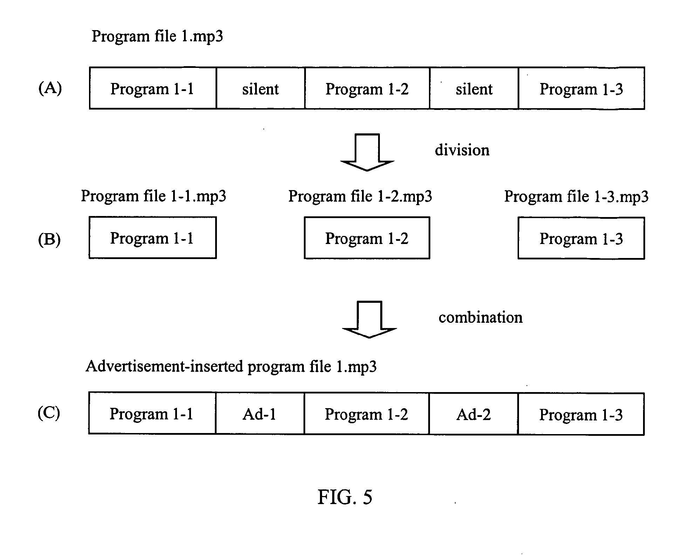

When a program producer such as a broadcasting station is to produce a program, as shown in FIG. 5A, to which locations advertisements are to be inserted during the program is determined in advance, and a program file is created by combining silent parts with those parts.

The program file registration function 373 detects the silent parts and, as shown in FIG. 5B, divides the file into three parts, a program file 1-1.mp3, a program file 1-2.mp3, a program file 1-3.mp3 except for the silent parts.

The divided files are combined with advertisements later, thereby creating an advertisement-inserted program file 1.mp3 shown in FIG. 5C (details of combining will be described later).

The information of the divided program files saved in the program file saving directory 357 is written to a program unit table 362 and a program file management table 363 in the database 353 by the program file registration function 373 and a program file update function 374.

The advertisement file 1.mp3 (903) is saved in the advertisement file saving directory 355 by an advertisement file registration function 375 through the browser 390, and the information thereof is recorded in an advertisement file management table 364 in the database 353.

Upon change and update of the contents of the advertisement file, the contents of the advertisement file management table 364 are similarly updated by using an advertisement file update function 376.

The update information is also recorded in an advertisement download table 365 serving as an advertisement distribution recording unit which manages the number of downloaded times of advertisements and records information such as the number of downloaded times or time zones with respect to advertisers and combined programs.

### Program Stock Generation Function

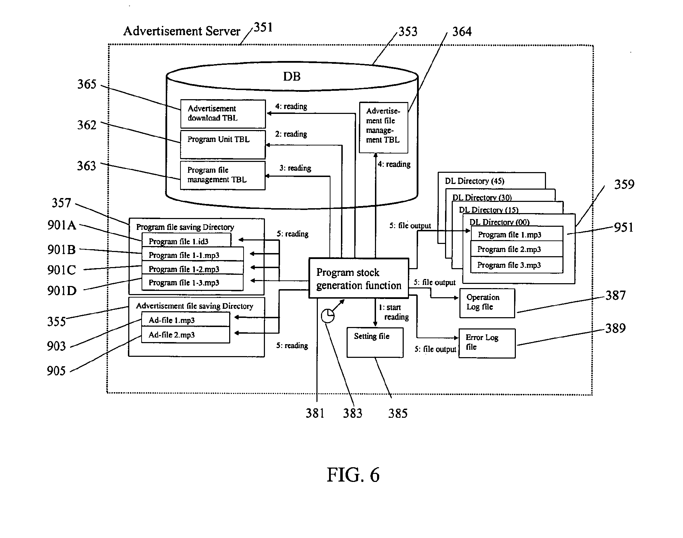

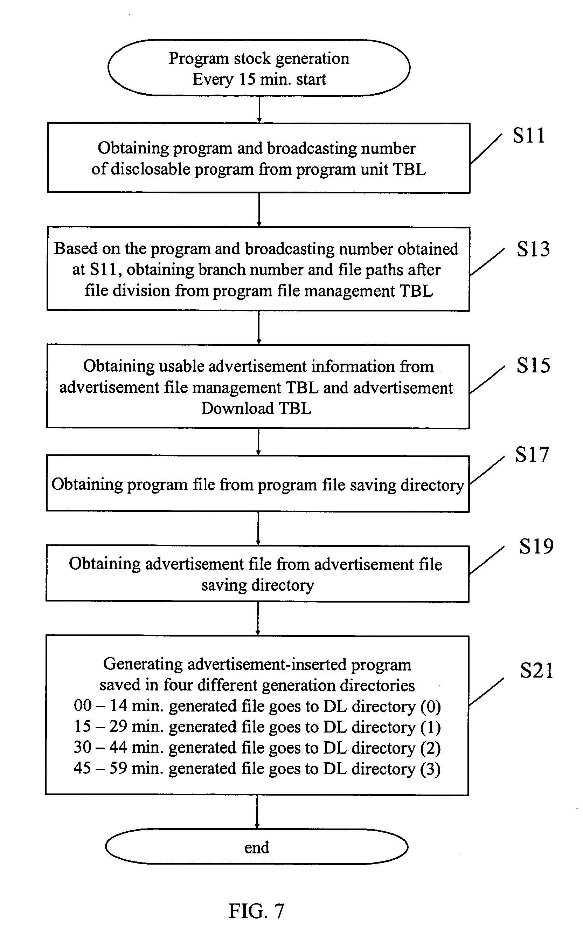

The program stock generation function will be described with reference to FIG. 6 and FIG. 7.

The function of creating advertisement-inserted program files in advance, instead of performing a process of creating an advertisement-inserted program file by combining an advertisement file with a program file every time a download request is received, is referred to as a program stock generation function.

FIG. 6 is a functional block diagram relating to the program stock generation function of the advertisement bank server. The advertisement bank server 351 has the program stock generation function 381. Processing of this function is started by activation of cron 383, and the function comprises a setting file 385 which is a combination instruction table describing setting of program stock generation function processes, an operation log file 387 which records program stock generation operations, an error log file 389 which performs recording when errors occur during the program stock generation operations, and the download directory 359 for downloading generated advertisement-inserted program files.

Next, a flow of the operation of the program stock generation function will be described by way of a flowchart.

Every time that is specified by the cron 383 (every 15 minutes in the case of the present embodiment), program stock generation is started.

In step S11, a program having disclosable conditions is searched for from the program unit table 362, and the program number and the broadcasting number thereof are acquired. Distribution starting date and time is specified for each program, and a program is considered to have a disclosable condition when the program is over the distribution starting date and time.

In step S13, based on the program number and the broadcasting number acquired in previous step S11, branch numbers and file paths after file dividing are acquired from the program file management table 363. When the information is acquired, a set of divided program files (for example, 901A to 901D) can be found from the program file saving directory 357.

In step S15, usable advertisement information is acquired from the advertisement file management table 364 and the advertisement download table 365. Through this step, a specified advertisement file (for example, advertisement file 1.mp3; 903) can be found from the advertisement file saving directory 355.

In step S17, a program file is acquired based on the information obtained in above described S13.

In step S19, an advertisement file is acquired based on the information obtained in above described S15.

In step S21, the program file obtained in above described S17 and the advertisement file obtained in above described S19 are combined, thereby generating an advertisement-inserted program file 951. The generated advertisement-inserted program file is saved in the download directory 359 which can be accessed by the apache servers. The download directory 359 comprises four different directories, a DL directory (0), a DL directory (1), a DL directory (2), and a DL directory (3). When the downloaded time is at 00th to 14th minutes, an advertisement-inserted program file in the DL directory (0) is downloaded. Thereafter, similarly, 15th to 29th minutes correspond to the DL directory (1), 30th to 44th minutes correspond to the DL directory (2), and 45th to 59th minutes correspond to the DL directory (3). Therefore, in accordance with setting, advertisement-inserted program files are saved in the specified directories.

The operation of the stock generation function is finished by the above described process.

### Program Real-time Generation Function

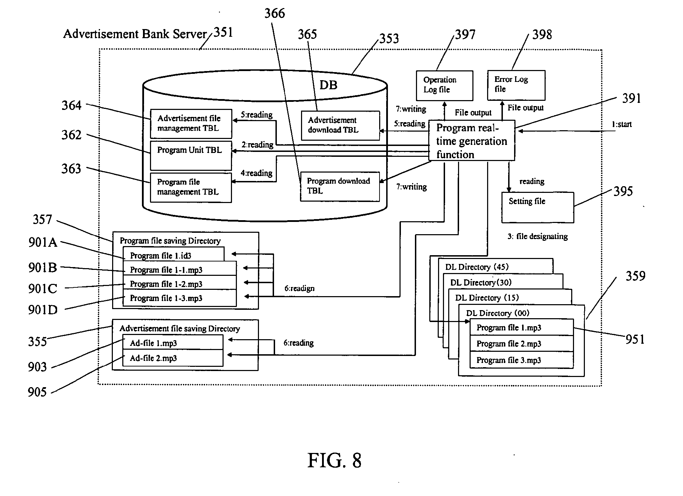

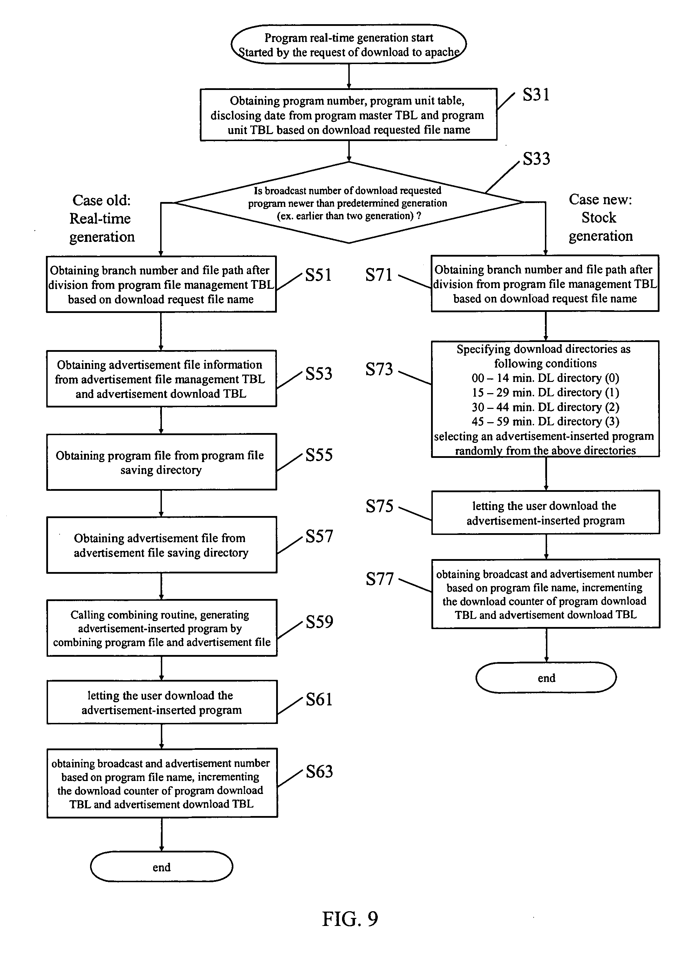

The program real-time generation function will be described with reference to FIG. 8 and FIG. 9.

A process of creating an advertisement-inserted file by combining an advertisement file with a program file can be performed every time a download request is received. However, the combining takes processing time. Therefore, the server immediately reaches the processing limit when the combining process is always performed in real time with respect to all download requests. Therefore, the present embodiment employs a hybrid method of the real-time generation and the stock generation.

FIG. 8 shows a functional block diagram of the program real-time generation function.

The advertisement bank server 351 has the database 353.

The advertisement bank server 351 also has the program real-time generation function 391 and executes the program real-time generation function in accordance with a setting file 395 which is a combination instruction table. The execution operation is recorded in an operation log file 397, and an error that occurs during the operation is recorded in an error log file 398. The generated advertisement-inserted program file is transmitted to the client via the apache server and, at the same time, saved in the download directory 359.

Next, the flow of operation of the program real-time generation function will be described with reference to the flowchart of FIG. 9.

A download request from the client is received by the apache server in the advertisement server, and the download request is passed to the advertisement bank server 351. When the download request is received from the apache, the operation is started.

First of all, in step S31, the program number and the disclosure date of the program unit table are acquired from the program master table and the program unit table based on a download requested file name.

Then, in step S33, whether the broadcasting number of the program for which download is required is newer than a specified number of generation (before second generation in the present embodiment) is determined.

When the file for which download is required is older than the specified generation, the operation proceeds to that of S51, and real-time generation is performed.

When the file for which download is requested is newer than the specified generation, the operation proceeds to that of S71, and stock generation is performed.

In podcast distribution, when certain programs are determined as favorite programs and the new programs thereof are distributed, there are quite a lot of viewers/listeners who download the program every.time. Thus, statistical results show that the number of download requests for the latest program or the program that is previous to the latest one is large. Therefore, even when the frequently-requested latest programs are subjected to stock generation since the number of requests is large, and old programs other than them are subjected to real-time generation, abnormal load is not imposed on the server since the number of requests is small. Therefore, the sorting to the real-time generation and the stock generation according to the above described generations is performed.

Then, the real-time generation from S51 will be described.

In S51, the branch numbers and file paths after file dividing are acquired from the program file management table 363 based on a download-requested file name.

In S53, information of a useable advertisement file is acquired from the advertisement file management table 364 and the advertisement download table 365.

In S55, program files (for example, 901A to 901D) are acquired from the program file saving directory 357.

In S57, an advertisement file (for example, advertisement file 1.mp3; 903) is acquired from the advertisement saving directory 355.

In S59, a combining routine is invoked, and the advertisement-inserted program file 951 is generated by combining the program file with the advertisement file.

In S61, the advertisement-inserted program file generated in the above described step is passed to the apache and caused to be downloaded.

In S63, the broadcasting number and the advertisement number are acquired from the program file name specified for downloading, and the number of downloading is added to a program download table 366 and the advertisement download table 365, respectively.

The flow of the real-time generation is finished by the above described process.

Next, the flow of the stock generation of S71 will be described.

In S71, branch numbers and file paths after file dividing are acquired from the program file management table 363 based on a download-requested file name.

In S73, a directory is specified in accordance with the operating time in the following manner from the DL directory 359 comprising four different directories. When the time is at 00th to 14th minutes, the download directory (0) is specified. Then, the download directory (1) is specified when 15th to 29th minutes, the download directory (2) is specified when 30th to 44th minutes, and the download directory (3) is specified when 45th to 59th minutes. One advertisement-inserted program file is randomly selected and acquired from among the advertisement-inserted program files in the specified directory.

In S75, the acquired advertisement-inserted program file is passed to the apache and caused to be downloaded.

In S77, the broadcasting number and the advertisement number are acquired from the program file name specified for downloading, and the number of downloading is added to the program download table 366 and the advertisement download table 365, respectively.

The operation is finished by the above described process.

Mechanism of Advertisement Replacement by Advertisement Bank Server and Advertisement Server

Next, a mechanism of advertisement replacement by the advertisement bank server and the advertisement server will be described.

In the bank server of the present embodiment, when a download request file from the client is received, a 404 error indicating that there is no file is intentionally generated by the web server instead of placing the request file in the corresponding download directory, and the generated error is detected by the apache server (error processing web server) of the advertisement server; thus, a file to be downloaded can be selected by the PHP program and passed to the apache server.

Therefore, a file can be randomly selected and returned from a plurality of types of advertisement-inserted program files in which the program prepared in the server side in advance and specified by a viewer/listener is combined with a plurality of types of different advertisements. Also, instead of selecting the file randomly, a program into which an advertisement appropriate for the target type of the user that is found out based on the downloading time or the IP address of the client is inserted can be downloaded.

Also, instead of utilizing advertisement-inserted programs prepared in advance, advertisement-inserted programs can be randomly distributed in real time in the above described manner, or the programs into which advertisements appropriate for the type of the target are inserted can be also distributed. This mechanism is referred to as advertisement replacement.

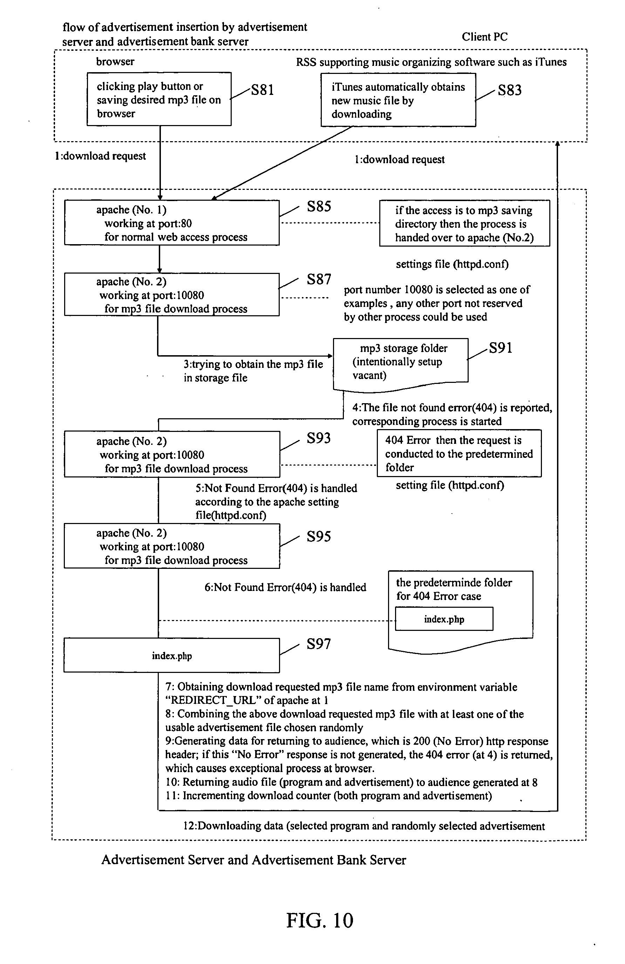

Hereinafter, the flow of the operation of the advertisement replacement mechanism will be described with reference to the flowchart of FIG. 10.

In S81, the client requests download by clicking a link of a program distributed from, for example, a homepage of a radio broadcasting station distributing programs by using a browser screen.

Also, in S83, the client automatically acquires RSS files linked from a podcast server by using the RSS-supporting music management software. If there is a newly uploaded program file, the RSS-supporting music management software starts downloading the newly-updated program file.

The download requests of above described S81 and S83 are received by the apache (No. 1) 301 of the advertisement server. Except for the case in which the download request is that of a specified audio file (MP3 file in the present embodiment), the apache (No. 1) directly processes the request through the normal port No. 80 which handles a HTTP protocol. (S85)

When the download request is that of an MP3 file, the specified MP3 file of the download request is tried to be downloaded from the specified directory; however, the specified directory is caused to be empty intentionally. Therefore, the apache (No. 1; web server) server causes a 404 error (there is no file) and passes the processing thereof to the other apache server apache (No. 2; error processing web server) 307 in the advertisement server through a port number 10080 (can be another unoccupied port number). (S87)

The apache (No. 2) which has received the download request of the MP3 file again checks whether there is the download-requested MP3 file in a specified MP3 storage folder as well as the above described operation of the apache (No. 1) in S91. However, the MP3 storage folder is intentionally caused to be empty as descried above.

In S93, the apache (No. 2) generates an error (404 error) indicating that there is no file since the MP3 file requested to be downloaded is not present.

In S95, upon generation of the error, error processing is performed in accordance with httpd.conf which is an apache operation file, and httpd.conf is described so that a program index.php described in PHP is activated in the case of the 404 error. Therefore, index.php is activated in S97.

In S97, the MP3 file name requested by the client to be downloaded is acquired according to an environmental variable (REDIRECT_URL) of apache.

Then, the flowchart of FIG. 8 is activated, and an advertisement-inserted program file to be downloaded is acquired in accordance with the flow of the flowchart.

Then, a header file including no error for returning a download file to the viewer/listener side is created. When it is returned without modification in the state of S93 wherein the 404 error is generated, the client may perform an unexpected operation based on the information of the 404 error contained in the header, and the distributed advertisement-inserted program may not be viewed/listened to. Therefore, the header without the error is generated in this step.

Then, the client-inserted program is returned to the client with the header without the error.

The download number aggregate counters (both that of program and advertisement) are incremented.

The series of operations of replacement is finished by the above described processes.

In the processing of generation of the 404 error indicating that there is no file of the apache (No. 1) in S85, the processing is transferred to the apache (No. 2) server merely when the error is generated in the directory in which the MP3 program file is expected to be placed (the file is not placed intentionally), a normal error processing is performed for 404 errors generated in other directories.

### Effects of the Embodiment

According to the present embodiment, when an MP3 file is requested from the client, an advertisement-inserted program file which is specified in advance in the server side can be retuned to the client.

The advertisement-inserted program file can be created in real time when download is requested, or a file that is created and stocked in advance may be distributed.

According to the above described method, even in distribution of one program, the program combined with a plurality of types of advertisements can be distributed to the clients. Therefore, there can be a plurality of advertisers for one program.

At what rate which advertisement is to be provided or whether it is to be randomly provided can be controlled in the distribution system side. Therefore, advertisements can be distributed at the frequency according to the demands of advertisers.

The advertisements of the programs to be distributed can be replaced according to the time zone in which the clients download the files. Therefore, more effective high advertisement effects corresponding to the target type of the clients can be achieved.

In addition to the time zone that the clients download files, more detailed advertisement measures can be taken by refining the target types based on IP addresses or, furthermore, by authenticating customers by utilizing cookie.

According to the advertisement replacement method of the present embodiment, in the RSS-supporting music management software, even when merely the contents of advertisements are changed although the program contents are the same, the RSS-supporting music management software determines that the program is same as the already downloaded program, thereby preventing occurrence of a plurality of wasteful download of the same program.

### Others

In the present embodiment, audio programs according to MP3 have been described. However, the embodiment can be performed by audio programs of formats other than MP3. Also, the embodiment can be similarly performed by video programs.

In the present embodiment, the distribution server system is comprised of two servers, the advertisement server and the advertisement bank server; however, the system can be comprised of one computer. Also, the advertisement server can be comprised of a plurality of computers, and the advertisement bank server can be comprised of a plurality of computers.

In the present embodiment, apache is used as a web server program; however, the operation can be similarly performed by other web server programs.

## Claims

1. A program distribution system comprising:
a web server for distributing an advertisement-inserted program via a network;
a program saving unit for saving the program;
an advertisement saving unit for saving the advertisement; and
a program and advertisement combining unit for selectively combining the saved program with advertisement so as to create an advertisement-inserted program.

2. The program distribution system according to claim 1, wherein
in accordance with a combination instruction table for combining a predetermined program with a predetermined advertisement from among one or a plurality of programs and one or a plurality of advertisements, the program and advertisement combining unit combines the predetermined program with the predetermined advertisement.

3. The program distribution system according to claim 1, wherein
in accordance with a combination instruction table corresponding to distribution time of the advertisement-inserted program, the program and advertisement combining unit combines a predetermined program with a predetermined advertisement from among one or a plurality of programs and one or a plurality of advertisements.

4. The program distribution system according to claim 2 or 3, wherein
the program and advertisement combining unit replaces a silent part which is inserted in the program in advance by the advertisement so as to combine the program with the advertisement.

5. The program distribution system according to one of claims 2 to 4, wherein
when download to a file described in URI (Uniform Resource Identifier)is requested, the web server causes the file described in the URI not to be present on the web server so as to cause an error indicating that the file is not present on the web server; and
the web server has an error processing web server which detects the error that the file is not present and transfers the advertisement-inserted program to the web server and distribute the program.

6. The program distribution system according to claim 5, wherein
the error processing web server detects the error that the file is not present and, as the advertisement-inserted program to be transferred to the web server, randomly selects one program from among advertisement-inserted programs combined with a plurality of different advertisements so as to distribute the program or to select the advertisement-inserted program at a specified rate so as to distribute the program.

7. The program distribution system according to claim 6, wherein
the web server has an advertisement distribution recording unit which records that the advertisement contained in the advertisement-inserted program is combined with which program in which time zone and the number of times of distribution.
